# EUROPEAN PATENT APPLICATION

(11) **EP 4 568 000 A1**
(43) Date of publication of application: **11.06.2025**
(21) Application number: 23875202.6
(22) Date of filing: 04.10.2023
(51) Int. Cl.: H01M 50/531, B26F 1/12, B26F 1/14, B26D 5/00

(54) **ELECTRODE NOTCHING DEVICE AND ELECTRODE MANUFACTURING METHOD**

(30) Priority: 05.10.2022 KR 20220126917
(71) Applicant: LG Energy Solution, Ltd., Seoul 07335 (KR)
(72) Inventor: KIM, Dongbeom, Daejeon 34122 (KR)
(74) Representative: Plasseraud IP
(86) International application number: PCT/KR2023/015231
(87) International publication number: WO 2024/076138

(57) **Abstract**

The present invention discloses an electrode notching apparatus and an electrode manufacturing method. The electrode notching apparatus of the present invention includes: a notching unit forming an electrode tab at a non-coated portion of an electrode sheet; a rewinder roller where a connecting sheet is wound; a splicing table whereon the electrode sheet and the connecting sheet are placed, the splicing table disposed between the notching unit and the rewinder roller; a camera unit photographing positions of the electrode sheet and the connecting sheet placed on the splicing table; a guide pointer unit indicating a first reference position of the electrode sheet and a second reference position of the connecting sheet; and a position alignment unit adjusting positions of the splicing table and the rewinder roller such that the electrode sheet is aligned with the first reference position and the connecting sheet is aligned with the second reference position.

## Description

### [TECHNICAL FIELD]

This application claims the benefit of priority based on Korean Patent Application No. 10-2022-0126917, dated October 5, 2022, entire content disclosed in the document of the patent applications is included as a part of this specification.

The present invention relates to an electrode notching apparatus and an electrode manufacturing method wherein electrode sheets are connected accurately, loss of electrode sheet is prevented, and connection time of the electrode sheets is shortened when replacing electrode sheets.

### [BACKGROUND ART]

Generally, secondary batteries include an anode, a cathode and an electrolyte, and generate electrical energy using chemical reactions. The use of secondary batteries is gradually increasing due to the advantage of being able to charge and discharge. Since lithium secondary batteries among such secondary batteries have a high energy density per unit weight, lithium secondary batteries are widely used as a power source for electronic communication devices or as a driving source for high-output hybrid vehicles and electric vehicles.

In terms of the shape of these secondary batteries, demand is increasing for prismatic secondary batteries and pouch-shaped secondary batteries that can be applied to products such as mobile phones due to their thin thickness. In terms of materials of secondary batteries, demand is increasing for lithium secondary batteries such as lithium-ion batteries and lithium-ion polymer batteries with high energy density, discharge voltage and output stability.

The electrode sheet is unwound from the unwinder and supplied to the notching module, and the notching module forms electrode tabs at equal intervals on the non-coated portion of the electrode. The electrode with the electrode tab is wound on the rewinder.

Whenever an electrode sheet is replaced with a new one in the unwinder, the existing electrode is cut and a new electrode is connected. Also, in the rewinder, bobbin is replaced with a new one. Here, in the rewinder the existing electrode is cut and connected to a connecting film (PET) or an electrode.

However, conventionally, since operators manually connect the electrodes at the rewinder, there may be deviations in the alignment of connecting positions and bonding spacing of the electrode depending on the operator's skill level. Additionally, when there are deviations in the alignment of connecting positions and bonding spacing of the electrode, the tension of the electrode in the widthwise direction of the electrode becomes non-uniform, which may cause the electrode to meander. Additionally, as the electrode meanders, the winding position of the electrode in the rewinder may become misaligned, which may cause various defects. Additionally, when a defect in an electrode occurs, an additional process of discarding the relevant electrode and reconnecting a new electrode must be performed, which may increase the average process time (tact time).

In addition, the process of the operator measuring the distance to the electrode to match the connecting position and the winding position of the electrode is also performed. In addition, when connecting a connecting film to an electrode, since the width of the connecting film is larger than the width of the electrode, the electrode must be placed in the center of the connecting film. In such process, the average process time and work loss may increase depending on the operator's skill level.

The background technology of the present invention is disclosed in Korean Patent Application Publication No. 2020-0109041 (published on September 22, 2020, title of the invention: Notching Method and Apparatus for Electrode Substrate).

### [DISCLOSURE]

### [TECHNICAL PROBLEM]

In order to solve the above-described problems, and it is an object of the present invention to provide an electrode notching apparatus and an electrode manufacturing method wherein the connecting position of an electrode sheet may be accurately and visually confirmed.

It is another object of the present invention to provide an electrode notching apparatus and an electrode manufacturing method wherein the connecting position of an electrode sheet and a connecting sheet may be corrected.

It is yet another object of the present invention to provide an electrode notching apparatus and an electrode manufacturing method wherein the operator's work time for making connection may be significantly shortened.

It is yet another object of the present invention to provide an electrode notching apparatus and an electrode manufacturing method wherein uniformity in the work of connecting electrode sheets and connecting sheets is ensured, almost regardless of the operator's skill level.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, an electrode notching apparatus of the present invention includes: a notching unit forming an electrode tab at a non-coated portion of an electrode sheet; a rewinder roller where a connecting sheet is wound; a splicing table whereon the electrode sheet and the connecting sheet are placed, the splicing table disposed between the notching unit and the rewinder roller; a camera unit photographing positions of the electrode sheet and the connecting sheet placed on the splicing table; a guide pointer unit indicating a first reference position of the electrode sheet and a second reference position of the connecting sheet; and a position alignment unit adjusting positions of the splicing table and the rewinder roller such that the electrode sheet is aligned with the first reference position and the connecting sheet is aligned with the second reference position.

The splicing table may include: a fixing table whereon the electrode sheet is placed; and an alignment table disposed between the fixing table and the rewinder roller and installed to be movable in a widthwise direction of the electrode sheet by the position alignment unit such that the electrode sheet is aligned with the first reference position.

A first fixing bar may be installed above the fixing table to fix the electrode sheet, and a second fixing bar may be installed above of the alignment table to fix the electrode sheet.

The position alignment unit may further include: a table alignment unit adjusting a position of the splicing table such that the electrode sheet is aligned with the first reference position; and a rewinder alignment unit adjusting a position of the rewinder roller such that the connecting sheet is aligned with the second reference position.

The splicing table may include a light-transmitting material.

The electrode notching apparatus may further include: a light irradiation unit irradiating light to the splicing table.

The light irradiation unit may be disposed under the splicing table.

The guide pointer unit may include: a first guide pointer indicating the first reference position on the splicing table; and a second guide pointer indicating the second reference position on the splicing table or the rewinder roller.

The first guide pointer and the second guide pointer may indicate the first reference position and the second reference position by linearly irradiating light to two widthwise ends of the electrode sheet.

At least one of the first guide pointer and the second guide pointer may be disposed under the splicing table.

When the connecting sheet is a connecting electrode, the first guide pointer may indicate the first reference position such that the electrode sheet and the connecting electrode are aligned, and the second guide pointer may indicate the second reference position such that the connecting electrode is wound around a lengthwise center of the rewinder roller.

When the connecting sheet is a connecting film, the first guide pointer may indicate the first reference position such that the electrode sheet is positioned at a widthwise center of the connecting film, and the second guide pointer may indicate the second reference position such that the connecting film is wound around a lengthwise center of the rewinder roller.

The camera unit may include a line-scan camera disposed parallel to a widthwise direction of the electrode sheet and the connecting sheet.

The camera unit may be disposed under the splicing table.

The electrode notching apparatus may further include: a foreign matter remover installed at the splicing table to remove foreign matter generated when the electrode sheet and the connecting sheet are cut.

The foreign matter remover may include: an air intake disposed at the splicing table; and an air blower connected to the air intake to provide suction power to the air intake.

An electrode manufacturing method of the present invention includes: a placing step of placing an electrode sheet and a connecting sheet on a splicing table; a photographing step of photographing by a camera unit positions of the electrode sheet and the connecting sheet placed on the splicing table; a indicating step of indicating by a guide pointer unit a first reference position of the electrode sheet and a second reference position of the connecting sheet; and an alignment step of adjusting positions of the splicing table and a rewinder roller by a position alignment unit such that the electrode sheet may be aligned with the first reference position and the connecting sheet may be aligned with the second reference position.

**In** the indicating step, the guide pointer unit may indicate the first reference position and the second reference position by irradiating light to two widthwise ends of the electrode sheet and the connecting sheet.

**In** the indicating step, the first reference position may be spaced apart by a distance equal to a width of the electrode sheet, and the second reference position may be spaced apart by a distance equal to a width of the connecting sheet.

**In** the indicating step, a first guide pointer of the guide pointer unit may indicate the first reference position on the splicing table, and a second guide pointer of the guide pointer unit may indicate the second reference position on the rewinding roller.

The first guide pointer and the second guide pointer may indicate the first reference position and the second reference position by linearly irradiating light to two widthwise ends of the electrode sheet.

When the connecting sheet is a connecting electrode, the first guide pointer may indicate the first reference position such that the electrode sheet and the connecting electrode are aligned, and the second guide pointer may indicate the second reference position such that the connecting electrode is wound around a lengthwise center of the rewinder roller.

**In** the photographing step, the controller may determine: a first distance between one widthwise end of a coated portion of the electrode sheet and one widthwise end of the connecting electrode; a second distance between end of an electrode tab of the electrode sheet and an electrode tab of the connecting electrode; a third distance between the end of the electrode tab of the electrode sheet and other lengthwise end of the rewinder roller; and a fourth distance between the one widthwise end of the coated portion of the electrode sheet and one widthwise end of the rewinder roller.

When the connecting sheet is a connecting film, the first guide pointer may indicate the first reference position such that the electrode sheet is positioned at a widthwise center of the connecting film, and the second guide pointer may indicate the second reference position such that the connecting film is wound around a lengthwise center of the rewinder roller.

**In** the photographing step, the controller may determine: a first distance between one widthwise end of a coated portion of the electrode sheet and one widthwise end of the connecting film; a second distance between an end of an electrode tab of the electrode sheet and other end of the connecting film, and the electrode. The third distance between the end of the electrode tab of the sheet and the other lengthwise end of the rewinder roller and the fourth distance between one widthwise end of the coated portion of the electrode sheet and one widthwise end of the rewinder roller are read.

In the alignment step, the position of the splicing table may be adjusted by a table alignment unit of the position alignment unit such that the electrode sheet is aligned with the first reference position, and the position of the rewinder alignment unit may be adjusted by a rewinder alignment unit of the position alignment unit such that the connecting sheet is aligned with the second reference position.

### [ADVANTTAGEOUS EFFECTS]

According to the present invention, since the guide pointer unit indicates the first reference position of the electrode sheet and the second reference position of the connecting sheet, the connecting position of the electrode sheet may be accurately and visually confirmed.

According to the present invention, the camera unit reads the positions of the electrode sheet and the connecting sheet, and the controller drives the position alignment unit to correct the connecting position of the electrode sheet and the connecting sheet. Accordingly, the electrode sheet and the connecting sheet may be accurately positioned at the connecting position.

According to the present invention, when the splicing table and the rewinder roller are aligned, the electrode sheet and the connecting sheet may be accurately aligned with the first reference position and the second reference position.

According to the present invention, since the electrode sheet and the connecting sheet are accurately aligned with the first reference position and the second reference position, the operator's work time for making connection may be significantly shortened.

According to the present invention, uniformity in the work of connecting electrode sheet and the connecting sheet may be ensured almost regardless of the operator's skill level.

In addition to the advantageous effects described above, specific effects of the present invention will be described further while describing specific details of the present invention.

### [BRIEF DESCRIPTION OF DRAWINGS]

FIG. 1 is a diagram schematically illustrating an electrode notching apparatus according to the present invention.
FIG. 2 is a plan view schematically illustrating the electrode notching apparatus according to the present invention.
FIG. 3 is a side view schematically illustrating the electrode notching apparatus according to the present invention.
FIG. 4 is a front view schematically illustrating the electrode notching apparatus according to the present invention.
FIG. 5 is a plan view schematically illustrating the state in which a splicing table and a rewinder roller align an electrode sheet and a connecting sheet in the electrode notching apparatus according to the present invention.
FIG. 6 is a plan view defining positions of the electrode sheet and the connecting electrode in the electrode notching apparatus according to the present invention.
FIG. 7 is a plan view schematically illustrating the positional deviation between the electrode sheet and the connecting electrode in the electrode notching apparatus according to the present invention.
FIG. 8 is a plan view determining the positions of the electrode sheet and the connecting film in the electrode notching apparatus according to the present invention.
FIG. 9 is a flow chart schematically illustrating an electrode manufacturing method according to the present invention.

10: electrode sheet 11: coated portion 12: non-coated portion 13: electrode tab 20: connecting sheet 21: connecting electrode 23: connecting film(PET) 100: electrode notching apparatus 110: unwinder roller 120: notching unit 130: rewinder roller 140: splicing table 141: fixing table 141a: lower fixing table 141b: upper fixing table 143: alignment table 143a: lower alignment table 143b: upper alignment table 145: first fixing bar 146: second fixing bar 147: fixing bar driver 150: camera unit 160: guide pointer unit 161: first guide pointer 162: second guide pointer 170: position alignment unit 171: table alignment unit 173: rewinder alignment unit 180: light irradiation unit 190: foreign matter remover 191: air intake 193: air blower R1: first reference position R2: second reference position

### [DETAILED DESCRIPTION OF THE INVENTION]

Hereinafter, preferred embodiments of the present invention will be described in detail with reference to the accompanying drawings.

The present invention is not limited to the embodiments disclosed hereinafter, and various changes may be applied and may be implemented in various different forms. The embodiment herein is only provided to complete the disclosure of the present invention and to fully inform those skilled in the art of the scope of the invention. Therefore, the present invention is not limited to the embodiments disclosed hereinafter, and it should be understood that the present invention includes all changes and equivalents encompassed in the technical spirit and scope of the present invention as well as substitution or addition of a configuration of one embodiment with that of another embodiment.

The accompanying drawings are only for facilitating understanding of the embodiments disclosed herein, and it should be understood that the technical idea disclosed herein is not limited by the accompanying drawings, and that encompasses all changes, equivalents and substitutions of the spirit and technical scope of the present invention. In the accompanying drawings, while components may be exaggeratedly large or small in size or thickness to facilitate understanding, etc., this should not construe the scope of protection of the present invention as being limited.

Terms used herein are only used to describe specific embodiments or examples, and are not intended to limit the present invention. In addition, the expressions in singular form include expressions in plural form unless the context clearly dictates otherwise. Herein, terms such as "comprise" and "consist of" are intended to designate that features, numbers, steps, operations, components, parts, or combinations thereof described in the specification exist. That is, it should be understood that terms such as "comprise", "consist of" used herein should not preclude the possibility of the presence or addition of one or more other features, numbers, steps, operations, components, parts, or combinations thereof.

While terms including ordinal numbers such as "first" and "second" may be used to describe various components, the components are not limited by the terms. The terms are only used for the purpose of distinguishing one component from another.

It should be understood that when an element is referred to as being "connected" to another element, the element may be directly connected to another element, or there may exist an interposing element in the middle. On the other hand, when an element is referred to as being "directly connected" to another element, it should be understood that there is no interposing element in the middle.

When an element is referred to as being "above" or "under" another element, it should be understood that there may exist an interposing elements in the middle as well as being directly above or under another element.

Unless defined otherwise, all terms used herein, including technical or scientific terms, have the same meaning as commonly understood by those skilled in the art to which the present invention belongs. Terms such as those defined in commonly used dictionaries should be interpreted as having a meaning consistent with the meaning in the context of the related art, and unless explicitly defined herein, terms such as those defined in commonly used dictionaries should not be interpreted in an ideal or excessively formal meaning.

Hereinafter, an electrode notching apparatus according to an embodiment of the present invention will be described.

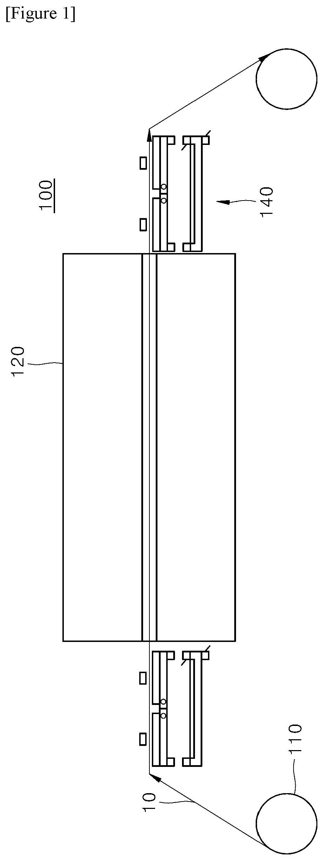

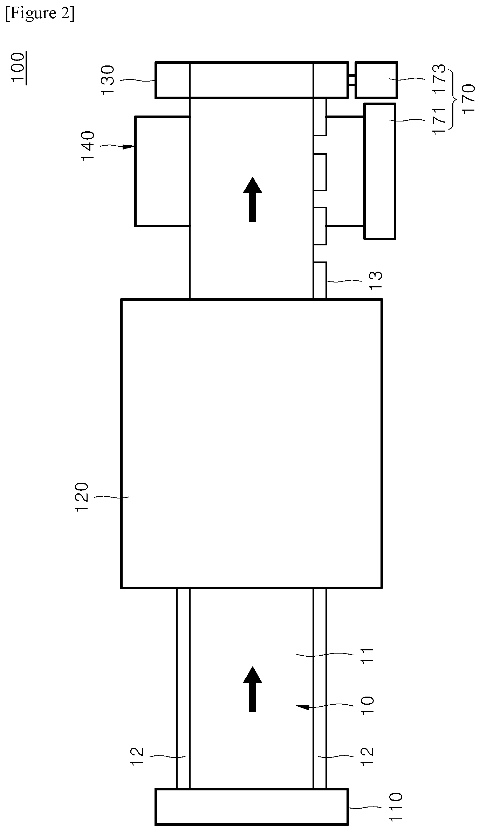

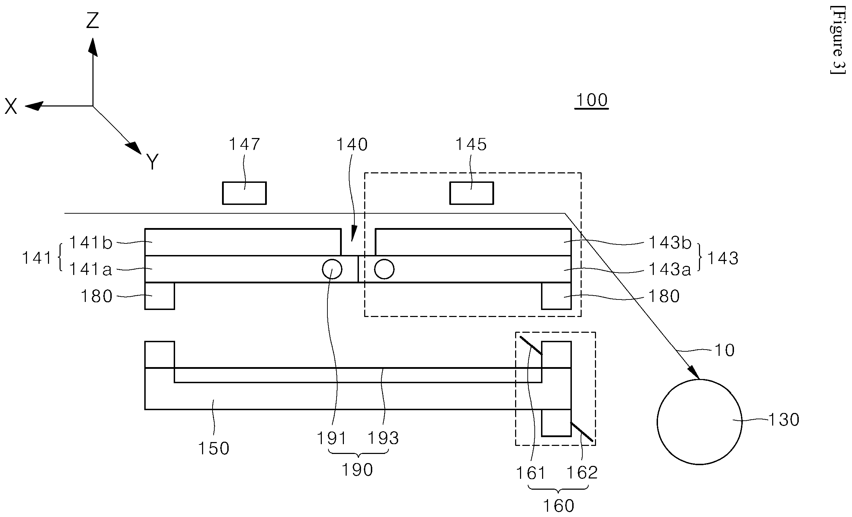

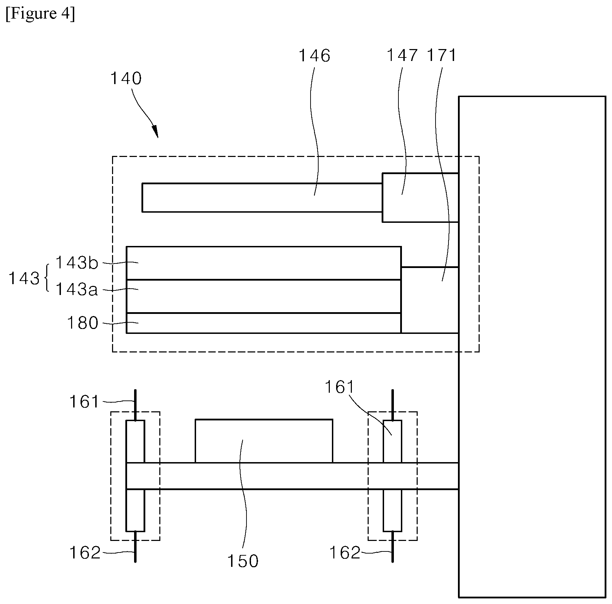

FIG. 1 is a diagram schematically illustrating an electrode notching apparatus according to the present invention, FIG. 2 is a plan view schematically illustrating the electrode notching apparatus according to the present invention, FIG. 3 is a side view schematically illustrating the electrode notching apparatus according to the present invention, and FIG. 4 is a front view schematically illustrating the electrode notching apparatus according to the present invention.

Referring to FIGS. 1 to 4, an electrode notching apparatus 100 according to an embodiment of the present invention includes a notching unit 120, a rewinder roller 130, a splicing table 140, a camera unit 150, a guide pointer unit 160, and a position alignment unit 170.

An electrode sheet 10 is wound on the unwinder roller 110. The electrode sheet 10 includes a coated portion 11 and a non-coated portion 12. The coated portion 11 is an area of the electrode sheet 10 where an active material is coated, and the non-coated portion 12 is an area of the electrode sheet 10 where the active material is not coated. The non-coated portion 12 at one widthwise end or two widthwise ends of the electrode sheet 10 has a predetermined width along the lengthwise direction of the electrode sheet 10.

The electrode sheet 10 unwound from the unwinder roller 110 is supplied to the notching unit 120. The notching unit 120 cuts the non-coated portion 12 of the electrode sheet 10 to form a plurality of electrode tabs 13. The plurality of electrode tabs 13 may be formed at equal intervals along the lengthwise direction of the non-coated portion 12. The notching unit 120 may form the plurality of electrode tabs 13 by cutting the non-coated portion 12 using a punch or laser. Various forms may be applied to the notching unit 120.

A connecting sheet 20 is wound on the rewinder roller 130. When the electrode sheet 10 is transported in a meandering or damaged state, the operator stops the electrode notching apparatus 100 and then cuts the electrode sheet 10 in the widthwise direction. After cutting a certain section of the electrode sheet 10 or correcting the meandering state, the electrode sheet 10 between the notching unit 120 and the rewinder roller 130 is reconnected with tape.

**In** addition, when replacing a new bobbin after winding of the electrode sheet 10 on the rewinder roller 130 is completed, the connecting film 23 wound around the bobbin and the electrode sheet 10 may be connected with tape. The connecting film 23 may be made of synthetic resin such as polyester film (PET), which has high thermal stability and strong mechanical strength. The tape may be attached to the electrode sheet 10 and connecting film 23 manually or automatically.

As described above, an electrode sheet 10 or a connecting film 23 (PET) is wound around the rewinder roller 130 depending on the process situation. The electrode sheet 10 and the connecting film 23 wound around the rewinder roller 130 will be referred to as the connecting sheet 20.

The splicing table 140 is disposed between the notching unit 120 and the rewinder roller 130. In the process of connecting the electrode sheet 10 and the connecting sheet 20, the electrode sheet 10 and the connecting sheet 20 are placed (S11) on the splicing table 140. The splicing table 140 is a component for cutting the electrode sheet 10 after the electrode roll is completely wound on the rewinder roller 130. Additionally, the electrode sheet 10 and the connecting sheet 20 are placed on the splicing table 140 when the electrode sheet 10 and the connecting sheet 20 are connected with tape. A light irradiation unit 180 irradiates light onto the splicing table 140 (S12).

The camera unit 150 photographs the positions of the electrode sheet 10 and the connecting sheet 20 placed on the splicing table 140 (S13). The camera unit 150 irradiates light to the electrode sheet 10 and the connecting sheet 20, detects the reflected light, and reads the positions of the electrode sheet 10 and the connecting sheet 20. A vision camera may be used as the camera unit 150.

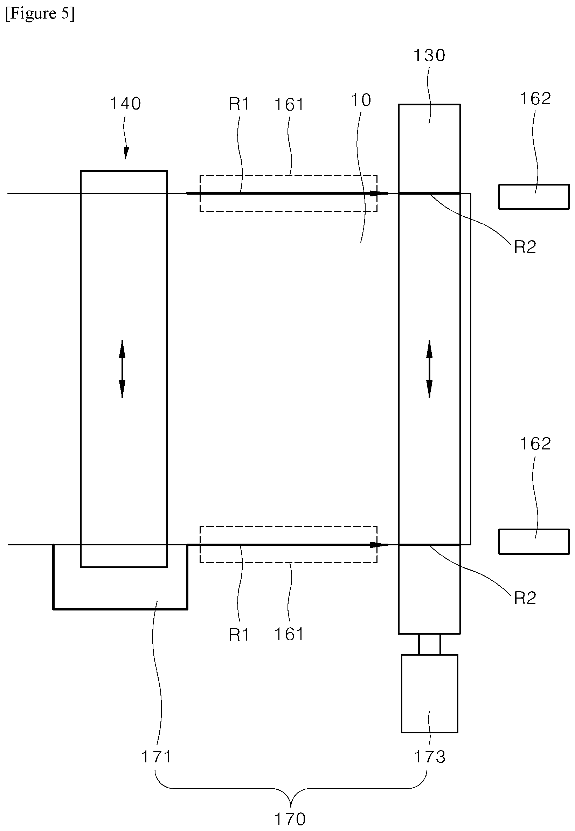

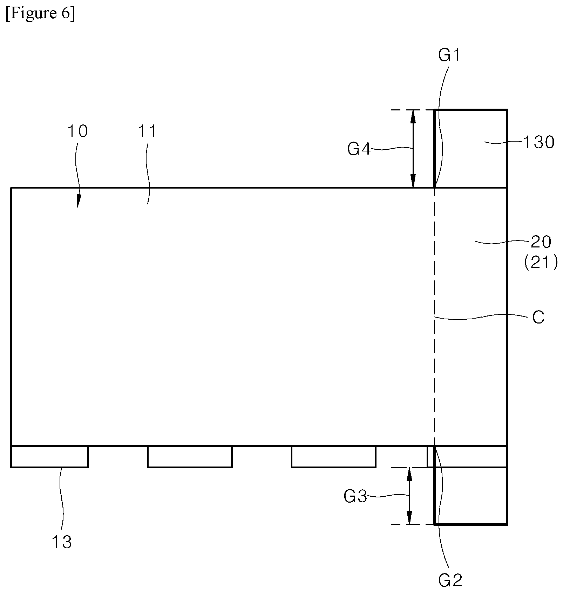

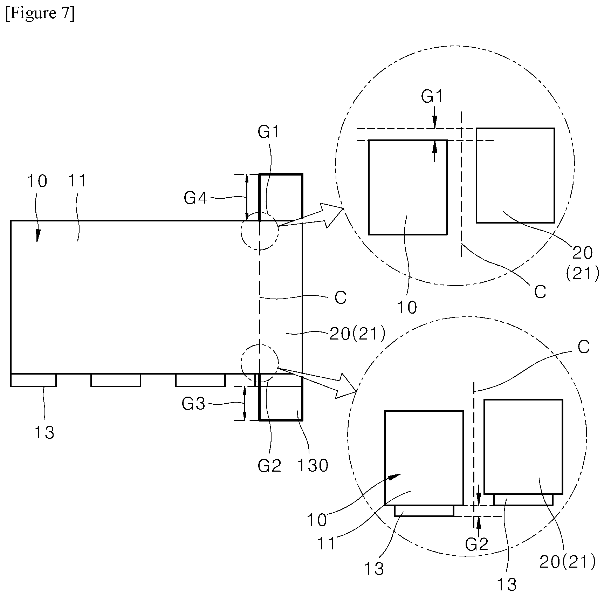

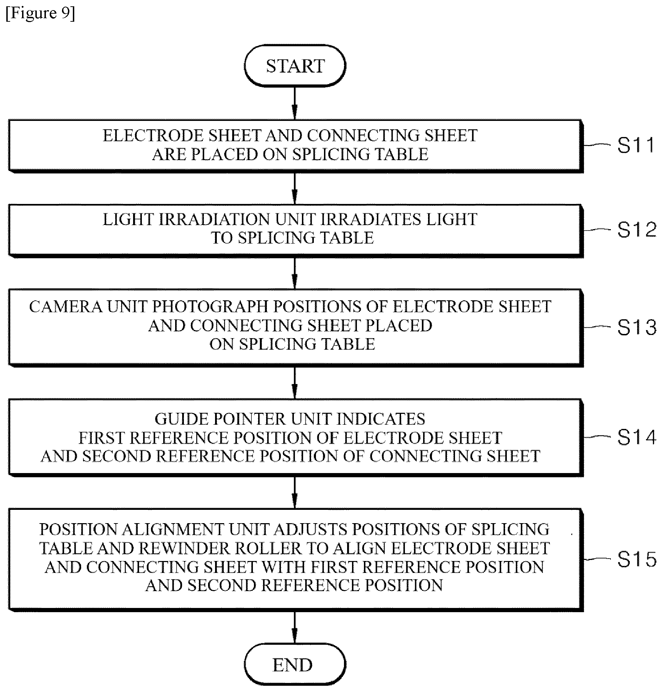

FIG. 5 is a plan view schematically illustrating the state in which a splicing table and a rewinder roller align an electrode sheet and a connecting sheet in the electrode notching apparatus according to the present invention, FIG. 6 is a plan view defining positions of the electrode sheet and the connecting electrode in the electrode notching apparatus according to the present invention, FIG. 7 is a plan view schematically illustrating the positional deviation between the electrode sheet and the connecting electrode in the electrode notching apparatus according to the present invention, and FIG. 9 is a flow chart schematically illustrating an electrode manufacturing method according to the present invention.

Referring to FIGS. 5 to 7 and 9, the guide pointer unit 160 indicates a first reference position R1 of the electrode sheet 10 and a second reference position R2 of the connecting sheet 20 (S14). The guide pointer unit 160 irradiates light to the two widthwise ends of the connecting sheet 20 and the electrode sheet 10 to indicate the first reference position R1 and the second reference position R2, respectively. The first reference position R1 is at the two widthwise ends of the electrode sheet 10 spaced apart by a distance equal to the width of the electrode sheet 10. The second reference position R2 is at the two widthwise ends of the connecting sheet 20 spaced apart by a distance equal to the width of the connecting sheet 20. Since the guide pointer unit 160 indicates the first reference position R1 of the electrode sheet 10 and the second reference position R2 of the connecting sheet 20, the connecting position of the electrode sheet may be accurately and visually confirmed.

The position alignment unit 170 adjusts the positions of the splicing table 140 and the rewinder roller 130 such that the electrode sheet 10 is aligned with the first reference position R1 and the connecting sheet 20 is aligned with the second reference position R2 (S15). That is, the controller PGC corrects the positional deviation of the electrode sheet 10 and the connecting sheet 20 read by the camera unit 150, and the position alignment unit 170 adjusts the splicing table 140 and the rewinder roller 130 in the amount of the correction value.

As described above, the camera unit 150 is controlled to read the positions of the electrode sheet 10 and the connecting sheet 20, and the controller controls the position alignment unit 170 to adjust the electrode sheet 10 and the connecting sheet 20 in the amount of the correction value. That is, the position alignment unit 170 adjusts the positions of the splicing table 140 and the rewinder roller 130 to correspond to the correct position received from the controller. When the splicing table 140 and the rewinder roller 130 are adjusted, the electrode sheet 10 and the connecting sheet 20 are exactly aligned with the first reference position R1 and the second reference position R2. As a result, the operator may visually inspect the first reference position R1 and the second reference position R2 to accurately confirm the correction values of the electrode sheet 10 and the connecting sheet 20. Additionally, the operator's connection work time may be significantly reduced. In addition, uniformity of connection work may be ensured almost regardless of the operator's skill level.

Referring to FIGS. 1 to 4 and 9, the splicing table 140 includes a fixing table 141 and an alignment table 143.

An electrode sheet 10 is placed on the upper surface of the fixing table 141. The fixing table 141 includes a lower fixing table 141a and an upper fixing table 141b placed on the lower fixing table 141a.

The alignment table 143 is disposed between the fixing table 141 and the rewinder roller 130. The electrode sheet 10 is installed to be movable in the widthwise direction of the electrode sheet 10 by the position alignment unit 170 such that the electrode sheet is aligned with the correction value. The alignment table 143 includes a lower alignment table 143a and an upper alignment table 143b placed on the upper surface of the lower alignment table 143a. The upper alignment table 143b and lower alignment table 143a are moved together in the widthwise direction of the electrode sheet 10 by the position alignment unit 170.

A first fixing bar 145 is installed above the fixing table 141 to fix the electrode sheet 10. A second fixing bar 146 is installed above the alignment table 143 to fix the electrode sheet 10. When the electrode sheet 10 is cut or connected, the first fixing bar 145 and the second fixing bar 146 are lowered to fix the electrode sheet 10. The first fixing bar 145 and the second fixing bar 146 are arranged parallel to the widthwise direction of the electrode sheet 10.

The position alignment unit 170 includes a table alignment unit 171 and a rewinder alignment unit 173.

The table alignment unit 171 adjusts the position of the splicing table 140 such that the electrode sheet 10 is aligned with the first reference position R1. The table alignment unit 171 moves the splicing table 140 in the widthwise direction of the electrode sheet 10. The table alignment unit 171 may include a step motor, linear motor, hydraulic cylinder, etc. capable of accurate position control.

The rewinder alignment unit 173 adjusts the position of the rewinder roller 130 such that the connecting sheet 20 is aligned with the second reference position R2. The rewinder alignment unit 173 moves the rewinder roller 130 in the widthwise direction of the electrode sheet 10. The rewinder alignment unit 173 may include a step motor, linear motor, hydraulic cylinder, etc. capable of accurate position control.

When one of the electrode sheet 10 and the connecting sheet 20 deviates from the first reference position R1 or the second reference position R2, only one of the table alignment unit 171 and the rewinder alignment unit 173 may be operated. In addition, when both the electrode sheet 10 and the connecting sheet 20 deviate from the first reference position R1 and the second reference position R2, the table alignment unit 171 and the rewinder alignment unit 173 may be operated together.

The splicing table 140 may be made of light-transmitting material. Light-transmitting materials may include various materials such as transparent acrylic resin, urethane resin, and quartz. Accordingly, even when the camera unit 150 is disposed under or above the splicing table 140, the positions of the electrode sheet 10 and the connecting sheet 20 may be accurately determined. In addition, even when the guide pointer unit 160 is disposed inside or outside the splicing table 140, the first reference position R1 and second reference position R2 of the electrode sheet 10 and connecting sheet 20 may be accurately indicated on the splicing table 140 or the rewinder roller 130.

The electrode notching apparatus 100 may further include a light irradiation unit 180 that irradiates light to the splicing table 140. Accordingly, since the camera unit 150 reads the positions of the electrode sheet 10 and the connecting sheet 20 with the light irradiation unit 180 irradiating light to the splicing table 140, the position reading of the camera unit 150 may be more accurate.

The light irradiation unit 180 may be disposed under the splicing table 140. Accordingly, the light irradiation unit 180 may be installed to avoid the transport path of the connecting sheet 20. Additionally, the degree of freedom of installation of the electrode notching apparatus 100 may be improved.

The guide pointer unit 160 may include a first guide pointer 161 and a second guide pointer 162.

The first guide pointer 161 indicates the first reference position R1 on the splicing table 140. The first guide pointer 161 indicates the first reference position R1 by irradiating a laser onto the first reference position R1 to be spaced apart by a distance equal to the width of the electrode sheet 10. Since the laser irradiated by the first guide pointer 161 travels straight, the laser may be prevented from diffracting or spreading when passed through the air or the splicing table 140 made of the light-transmitting material. Accordingly, the first reference position R1 may be accurately indicated.

The second guide pointer 162 indicates the second reference position R2 on the splicing table 140. The second guide pointer 162 indicates the second reference position R2 by irradiating a laser onto the second reference position R2 to be spaced apart by a distance equal to the width of the connecting sheet 20. Since the laser irradiated by the second guide pointer 162 travels straight, the laser may be prevented from diffracting or spreading when passed through the air or the splicing table 140 made of the light-transmitting material. Accordingly, the second reference position R2 may be accurately indicated.

The first guide pointer 161 and the second guide pointer 162 indicate the first reference position R1 and the second reference position R2 by linearly irradiating light to the two widthwise ends of the electrode sheet 10. Since the first reference position R1 and second reference position R2 are indicated in linear manner, the distortion, meandering, etc. of the electrode sheet 10 and connecting sheet 20 may be accurately confirmed.

At least one of the first guide pointer 161 and the second guide pointer 162 may be disposed under the splicing table 140. Therefore, the first guide pointer 161 and the second guide pointer 162 may be installed to avoid the transport path of the electrode sheet 10.

The camera unit 150 may include a line-scan camera 150 arranged parallel to the widthwise direction of the electrode sheet 10 and the connecting sheet 20. The length of the line-scan camera 150 may be slightly shorter than the width of the electrode sheet 10 and the connecting sheet 20.

The camera unit 150 may be disposed under the splicing table 140. Here, the light irradiation unit 180 may be disposed between the splicing table 140 and the camera unit 150.

The electrode notching apparatus 100 may further include a foreign matter remover 190 installed on the splicing table 140 to remove foreign matters generated when the electrode sheet 10 and the connecting sheet 20 are cut. The foreign matters generated when the electrode sheet 10 and the connecting sheet 20 are cut may be prevented from attaching to the electrode sheet 10 and the connecting sheet 20. Accordingly, an increase in the defect rate from due to foreign matters in subsequent processes may be prevented.

The foreign matter remover 190 includes an air intake 191 and an air blower 193.

The air intake 191 is disposed on the splicing table 140. The air intake 191 is disposed between the fixing table 141 and the alignment table 143 where the electrode sheet 10 is cut on the splicing table 140.

The air blower 193 is connected to the air intake 191 to provide suction power to the air intake 191. The air blower 193 is connected to the air intake 191 through an intake hose. The intake hose is installed in a manner that the light irradiation area of the light irradiation unit 180 and the reading area of the camera unit 150 are avoided.

FIG. 5 is a plan view schematically illustrating the state in which a splicing table and a rewinder roller align an electrode sheet and a connecting sheet in the electrode notching apparatus according to the present invention, FIG. 6 is a plan view defining positions of the electrode sheet and the connecting electrode in the electrode notching apparatus according to the present invention, and FIG. 7 is a plan view schematically illustrating the positional deviation between the electrode sheet and the connecting electrode in the electrode notching apparatus according to the present invention.

Referring to FIGS. 5 to 7, when the camera unit 150 irradiates light to the electrode sheet 10 and the connecting electrode 21, the positions of the electrode sheet 10 and the connecting electrode 21 are read. Here, a distance (first distance: G1) between one (upper) widthwise end of the coated portion 11 of the electrode sheet 10 and one widthwise end of the connecting electrode 21, a distance (second distance: G2) between the end of the electrode tab 13 of the electrode sheet 10 and the electrode tab 13 of the connecting electrode 21, a distance (third distance: G3) between the end of the electrode tab 13 of the electrode sheet 10 and the other lengthwise end of the rewinder roller 130, a distance (fourth distance: G4) between one widthwise end of the coated portion 11 of the electrode sheet 10 and one widthwise end of the rewinder roller 130 are determined.

When the connecting sheet 20 is a connecting electrode 21, the first guide pointer 161 indicates the first reference position R1 such that the electrode sheet 10 and the connecting electrode 21 are aligned. The second guide pointer 162 indicates the second reference position R2 such that the connecting electrode 21 is wound around a lengthwise center of the rewinder roller 130. In addition, the first guide pointer 161 may indicate the first reference position R1 on the splicing table 140, and the second guide pointer 162 may indicate the second reference position R2 on the splicing table 140 or rewinder roller 130.

The controller drives the table alignment unit 171 to correct the deviation such that the first distance G1 and the second distance G2 are of the same value, and controls the rewinder alignment unit 173 to correct the deviation such that the third distance G3 and the fourth distance G4 are of the same value. Here, the deviation correction of the first distance G1 and the second distance G2 is to align the electrode sheet 10 and connecting sheet 20 with the first reference position R1. In addition, the deviation correction of the third distance G3 and the fourth distance G4 is to align the electrode sheet 10 and connecting sheet 20 with the second reference position R2, and to align the electrode sheet 10 and connecting sheet 20 with the lengthwise center of the rewinder roller 130.

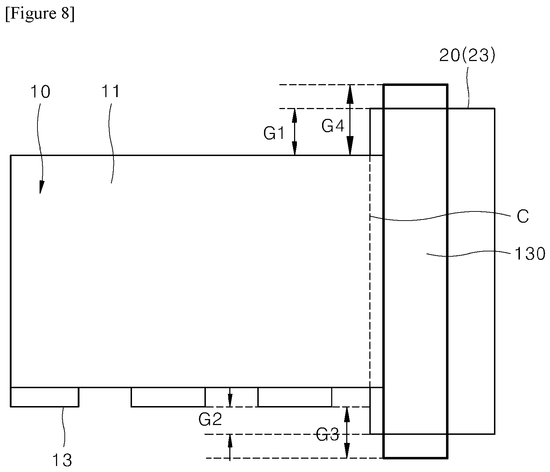

FIG. 8 is a plan view determining the positions of the electrode sheet and the connecting film in the electrode notching apparatus according to the present invention.

Referring to FIG. 8, when the camera unit 150 irradiates light to the electrode sheet 10 and the connecting film 23, the positions of the electrode sheet 10 and the connecting film 23 are read. Here, a distance (first distance: G1) between one (upper) widthwise end of the coated portion 11 of the electrode sheet 10 and one widthwise end of the connecting film 23, a distance (second distance: G2) between the end of the electrode tab 13 of the electrode sheet 10 and the other end of the connecting film 23, a distance (third distance: G3) between the end of the electrode tab 13 of the electrode sheet 10 and the other lengthwise end of the rewinder roller 130, a distance (fourth distance: G4) between one widthwise end of the coated portion 11 of the electrode sheet 10 and one widthwise end of the rewinder roller 130 are determined.

When the connecting sheet 20 is a connecting film 23, the first guide pointer 161 indicates the first reference position R1 such that the electrode sheet 10 is positioned at the widthwise center of the connecting film 23. Here, the second guide pointer 162 indicates the second reference position R2 such that the connecting film 23 is wound around a lengthwise center of the rewinder roller 130. In addition, the first guide pointer 161 may indicate the first reference position R1 on the splicing table 140, and the second guide pointer 162 may indicate the second reference position R2 on the splicing table 140 or rewinder roller 130.

The controller drives the table alignment unit 171 to correct the deviation such that the first distance G1 and the second distance G2 are of the same value, and controls the rewinder alignment unit 173 to correct the deviation such that the third distance G3 and the fourth distance G4 are of the same value. Here, the deviation correction of the first distance G1 and the second distance G2 is to align the electrode sheet 10 and connecting film 23 with the first reference position R1. In addition, the deviation correction of the third distance G3 and the fourth distance G4 is to align the electrode sheet 10 and connecting film 23 with the second reference position R2, and to align the electrode sheet 10 and connecting film 23 with the lengthwise center of the rewinder roller 130.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. An electrode notching apparatus comprising:
a notching unit forming an electrode tab at a non-coated portion of an electrode sheet;
a rewinder roller where a connecting sheet is wound;
a splicing table whereon the electrode sheet and the connecting sheet are placed, the splicing table disposed between the notching unit and the rewinder roller;
a camera unit photographing positions of the electrode sheet and the connecting sheet placed on the splicing table;
a guide pointer unit indicating a first reference position of the electrode sheet and a second reference position of the connecting sheet; and
a position alignment unit adjusting positions of the splicing table and the rewinder roller such that the electrode sheet is aligned with the first reference position and the connecting sheet is aligned with the second reference position.

2. The electrode notching apparatus of claim 1, wherein the splicing table comprises:
a fixing table whereon the electrode sheet is placed; and
an alignment table disposed between the fixing table and the rewinder roller and installed to be movable in a widthwise direction of the electrode sheet by the position alignment unit such that the electrode sheet is aligned with the first reference position.

3. The electrode notching apparatus of claim 1, wherein a first fixing bar is installed above the fixing table to fix the electrode sheet, and
a second fixing bar is installed above the alignment table to fix the electrode sheet.

4. The electrode notching apparatus of claim 1, wherein the position alignment unit further comprises:
a table alignment unit adjusting a position of the splicing table such that the electrode sheet is aligned with the first reference position; and
a rewinder alignment unit adjusting a position of the rewinder roller such that the connecting sheet is aligned with the second reference position.

5. The electrode notching apparatus of claim 1, wherein the splicing table comprises a light-transmitting material.

6. The electrode notching apparatus of claim 5, further comprising: a light irradiation unit irradiating light to the splicing table.

7. The electrode notching apparatus of claim 6, wherein the light irradiation unit is disposed under of the splicing table.

8. The electrode notching apparatus of claim 1, wherein the guide pointer unit comprises:
a first guide pointer indicating the first reference position on the splicing table; and
a second guide pointer indicating the second reference position on the splicing table or the rewinder roller.

9. The electrode notching apparatus of claim 8, wherein the first guide pointer and the second guide pointer indicate the first reference position and the second reference position by linearly irradiating light to two widthwise ends of the electrode sheet.

10. The electrode notching apparatus of claim 8, wherein at least one of the first guide pointer and the second guide pointer is disposed under the splicing table.

11. The electrode notching apparatus of claim 8, wherein, when the connecting sheet is a connecting electrode, the first guide pointer indicates the first reference position such that the electrode sheet and the connecting electrode are aligned, and
the second guide pointer indicates the second reference position such that the connecting electrode is wound around a lengthwise center of the rewinder roller.

12. The electrode notching apparatus of claim 8, wherein, when the connecting sheet is a connecting film, the first guide pointer indicates the first reference position such that the electrode sheet is positioned at a widthwise center of the connecting film, and
the second guide pointer indicates the second reference position such that the connecting film is wound around a lengthwise center of the rewinder roller.

13. The electrode notching apparatus of claim 1, wherein the camera unit comprises a line-scan camera disposed parallel to a widthwise direction of the electrode sheet and the connecting sheet.

14. The electrode notching apparatus of claim 1, wherein the camera unit is disposed under the splicing table.

15. The electrode notching apparatus of claim 1, further comprising: a foreign matter remover installed at the splicing table to remove foreign matter generated when the electrode sheet and the connecting sheet are cut.

16. The electrode notching apparatus of claim 15, wherein the foreign matter remover comprises:
an air intake disposed at the splicing table; and
an air blower connected to the air intake to provide suction power to the air intake.

17. An electrode manufacturing method comprising:
a placing step of placing an electrode sheet and a connecting sheet on a splicing table;
a photographing step of photographing by a camera unit positions of the electrode sheet and the connecting sheet placed on the splicing table;
a indicating step of indicating by a guide pointer unit a first reference position of the electrode sheet and a second reference position of the connecting sheet; and
an alignment step of adjusting positions of the splicing table and a rewinder roller by a position alignment unit such that the electrode sheet is aligned with the first reference position and the connecting sheet is aligned with the second reference position.

18. The electrode manufacturing method of claim 17, wherein, in the indicating step, the guide pointer unit indicates the first reference position and the second reference position by irradiating light to two widthwise ends of the electrode sheet and the connecting sheet.

19. The electrode manufacturing method of claim 18, wherein, in the indicating step, the first reference position is spaced apart by a distance equal to a width of the electrode sheet, and
the second reference position is spaced apart by a distance equal to a width of the connecting sheet.

20. The electrode manufacturing method of claim 15, wherein, in the indicating step, a first guide pointer of the guide pointer unit indicates the first reference position on the splicing table, and
a second guide pointer of the guide pointer unit indicates the second reference position on the rewinding roller.

21. The electrode manufacturing method of claim 20, wherein the first guide pointer and the second guide pointer indicate the first reference position and the second reference position by linearly irradiating light to two widthwise ends of the electrode sheet.

22. The electrode manufacturing method of claim 20, wherein, when the connecting sheet is a connecting electrode, the first guide pointer indicates the first reference position such that the electrode sheet and the connecting electrode are aligned, and
the second guide pointer indicates the second reference position such that the connecting electrode is wound around a lengthwise center of the rewinder roller.

23. The electrode manufacturing method of claim 22, wherein, in the photographing step, the controller determines: a first distance between one widthwise end of a coated portion of the electrode sheet and one widthwise end of the connecting electrode; a second distance between end of an electrode tab of the electrode sheet and an electrode tab of the connecting electrode; a third distance between the end of the electrode tab of the electrode sheet and other lengthwise end of the rewinder roller; and a fourth distance between the one widthwise end of the coated portion of the electrode sheet and one widthwise end of the rewinder roller.

24. The electrode manufacturing method of claim 20, wherein, when the connecting sheet is a connecting film, the first guide pointer indicates the first reference position such that the electrode sheet is positioned at a widthwise center of the connecting film, and
the second guide pointer indicates the second reference position such that the connecting film is wound around a lengthwise center of the rewinder roller.

25. The electrode manufacturing method of claim 24, wherein, in the photographing step, the controller determines: a first distance between one widthwise end of a coated portion of the electrode sheet and one widthwise end of the connecting film; a second distance between an end of an electrode tab of the electrode sheet and other end of the connecting film, and the electrode. The third distance between the end of the electrode tab of the sheet and the other lengthwise end of the rewinder roller and the fourth distance between one widthwise end of the coated portion of the electrode sheet and one widthwise end of the rewinder roller are read.

26. The electrode manufacturing method of claim 17, wherein, in the alignment step, the position of the splicing table is adjusted by a table alignment unit of the position alignment unit such that the electrode sheet is aligned with the first reference position, and
the position of the rewinder alignment unit is aligned by a rewinder alignment unit of the position alignment unit such that the connecting sheet is aligned with the second reference position.
